# EUROPEAN PATENT APPLICATION

(11) **EP 4 570 356 A1**
(43) Date of publication of application: **18.06.2025**
(21) Application number: 24213092.0
(22) Date of filing: 14.11.2024
(51) Int. Cl.: B01D 53/14

(54) **PROCESS AND APPARATUS FOR THE PURIFICATION OF BIOGAS**

(30) Priority: 17.11.2023 NL 2036288
(71) Applicant: Opure B.V., 6716 BX Ede (NL)
(72) Inventor: DUINE, Arnaud Marinus Aart, 6716 BX EDE (NL)
(74) Representative: De Vries & Metman

(57) **Abstract**

The present disclosure pertains to a rocess for the removal of carbon dioxide form biogas comprising the following steps:
a. carbon dioxide-containing biogas is washed in a gas scrubber (1) by contacting the carbon dioxide-containing gas with a liquid dialkali carbonate-containing buffer solution (3) in the gas scrubber (1), forming:
i) a carbon dioxide-poor biogas stream, and
ii) a liquid stream comprising carbonate-rich buffer solution,

b. the carbonate-rich buffer solution is regenerated by feeding it to an aeration tank (2) in which it is contacted with air to form regenerated dialkali carbonate-containing buffer solution and carbon dioxide.

Compared to processes described in the prior art this process may be conducted with relatively inexpensive equipment, is energy efficient and is already cost- effective at lower capacities.

## Description

### Field

The present disclosure is in the field of the purification of biogas.

### Background

With the scarcity of fossil fuels and their large impact on the environment, alternative ways of obtaining fuel are explored. Many of them are directed to the retrieval of biogas (methane) from fermentation of organic waste. However, one of the challenges faced is the fact that biogas obtained from fermentation generally also contains about 50 vol.% of carbon dioxide. The presence of carbon dioxide interferes with the various applications of biogas as for instance NCG (natural compressed gas). Further it is desired to create processes that can economically be conducted at smaller scale at the site of biogas production.

For instance, WO 2016/019984 describes a cyclic process for alternating utilization of crude biogas comprises two modes of utilization, namely a useful gas provision and a conversion to power. In the first mode carbon dioxide is from the crude biogas by reaction of the carbon dioxide with the alkali metal carbonate to form alkali metal hydrogencarbonate. In the second mode of the crude biogas is combusted in a thermal engine (6) to generate electrical energy and waste heat. In the process described in WO 2016/019984 the carbon dioxide is converted with the alkalimetal carbonate into precipitated alkali metal hydrogencarbonate. Said solid particulate alkali hydrogen carbonate is subsequently regenerated at a temperature between 200 and 300 °C.

WO 2013/034947 describes a purification of raw biogas from organic waste anaerobic digestion to biomethane by scrubbing raw biogas in an absorber using a sodium carbonate-rich growth liquor of microalgae of an algae farming plant for absorbing carbon dioxide and other gaseous substances contained in the biogas and reacting carbon dioxide with the sodium carbonate to form sodium bicarbonate in the liquor; returning a bicarbonate enriched liquor leaving the absorber to the algae farming plant as bicarbonate feed to the growing algae for having the carbon dioxide metabolized and regenerating sodium carbonate in the liquor, which is thence reusable for scrubbing fresh raw biogas in said absorber. The fact that the bicarbonate enriched liquor is returned to the algae forming plant to be digested by the algae, places severe restrictions on the process' flexibility with respect to capacity, concentration, and equipment.

US 2021/253456 describes a biogas treatment process is integrated with a water treatment process to adjust the pH level of the water and to provide more effective disinfection of the water. A water wash process is utilized to separate methane and carbon dioxide present in the biogas. During the water wash process, the biogas is mixed with water and the carbon dioxide is absorbed into the water. Because the process typically occurs at an elevated pressure and reduced temperature to enhance the solubility of carbon dioxide in water, the water stream becomes supersaturated with carbon dioxide. This water stream, which is supersaturated with carbon dioxide, is provided to the water treatment process to adjust the pH level of the water treatment process. The pH level is regulated to a desired level such that an increased relative concentration of hypochlorous acid is produced when sodium hypochlorite is added to the treatment process. The proces of this publication is based on solving carbon dioxide in water, optionally with carbon dioxide already present in the water. Because of the poor solubility of carbon dioxide in water even at increased pressure and decreased temperature, this cannot be considered a viable or economical process, especially when equipment for increaded pressure and decreased temperature has to be used.

US 2012/000357 describes a biogas processing system having a compressor having a biogas input and output, a pump having a water input and output, a scrubber tower having a mixing chamber connected to a biogas input, a water pump input, a water output, and a processed biogas output, and a filtration member connected to the water output to remove contaminants from the water exiting the first scrubber tower. The system also includes devices for heating and cooling the recycled flow of water to enhance the ability of the water to absorb contaminants from the biogas and the ability of a stripper to remove absorbed contaminants from the water in a closed loop water system, and a controller for closely controlling the operating parameters of the system to achieve safe an optimal operation of the system.

US 2013/071307 describes the absorptive removal of carbon dioxide from biogas using a scrubbing liquid in which carbon dioxide is solved. proceeds by heating the loaded scrubbing liquid, occurring after the absorption, to a temperature at which liberation of CO2 begins. Immediately thereafter, the loaded scrubbing liquid is fed to at least one centrifugal separator for separating off the gas phase from the liquid phase, wherein methane and dissolved fractions of CO2 escape via the gas phase. After separation is complete, the gas phase is passed into the absorber unit and the liquid phase is further heated to the temperature required for desorption and fed to the desorption unit for regeneration.

Despite the various publications describing the purification of biogas, the prior art processes leave much to be desired with respect to ease of conducting, costs, freedom of choice in capacity, energy consumption, complexity and/or costs of equipment and severity of reaction conditions over the process as a whole or combinations of these aspects.

### Summary

The present disclosure provides a process for the purification of biogas that is inexpensive and elegant in its simplicity, efficiency and costs.

The present disclosure pertains to a process for the removal of carbon dioxide from biogas comprising the following steps:
a. carbon dioxide-containing biogas is washed in a gas scrubber (1) by contacting the carbon dioxide-containing gas with a liquid dialkali carbonate-containing buffer solution (3) in the gas scrubber (1), forming:
   i) a carbon dioxide-poor biogas stream, and
   ii) a liquid stream comprising carbonate-rich buffer solution,
b. the carbonate-rich buffer solution is regenerated by feeding it to an aeration tank (2) in which it is contacted with air to form regenerated dialkali carbonate-containing buffer solution and carbon dioxide.

Preferably at least part of the regenerated dialkali carbonate-containing buffer solution (4) is recycled to step a.

In one embodiment oxygen being present in the regenerated dialkali carbonate buffer solution is removed in an oxygen removal vessel (6) prior to recycling to step a. Said oxygen is preferably removed by means of vacuum degassing or via a reversed osmosis membrane that has been provided in the oxygen removal vessel (6).

Prior to the regeneration, methane present in the carbonate- rich stream may be removed in a methane removal vessel (5) and recycled to step a. Preferably, said removal is conducted via vacuum degassing.

Generally the carbon dioxide-containing biogas contains between 35 to 45 vol% carbon dioxide.

The carbon dioxide-poor biogas stream obtained with the process according to the disclosure generally contains between 82 to 100 vol% methane, preferably between 90 and 95 vol% methane.

The dialkali carbonate-containing buffer solution (3) present in the gas scrubber (1) suitably has a concentration of between 2-15 wt%, preferably between 2-6 wt%.

The present disclosure further pertains to an apparatus for the purification of biogas comprising:
- a gas scrubber(1) provided with a gas inlet for CO₂- containing biogas and an gas outlet for CO₂-poor biogas, a liquid inlet and a liquid recycle loop;
- an aeration tank (2) with a liquid inlet, a liquid outlet, an air inlet and an air outlet, the liquid inlet being connected to the liquid recycle loop, the air inlet being constructed so as to introduce air at the lower part of the aeration tank, the air outlet being provided at the upper part of the aeration tank, and the liquid outlet being connected to the liquid inlet of the gas scrubber(1). Optionally, the apparatus is further provided with a methane removal vessel(5) that is connectively placed between the liquid inlet of the aeration tank (2) and the recycle loop and /or an oxygen removal vessel(6) that connectively placed between the liquid outlet of the aeration tank and the liquid inlet of the gas scrubber(1).

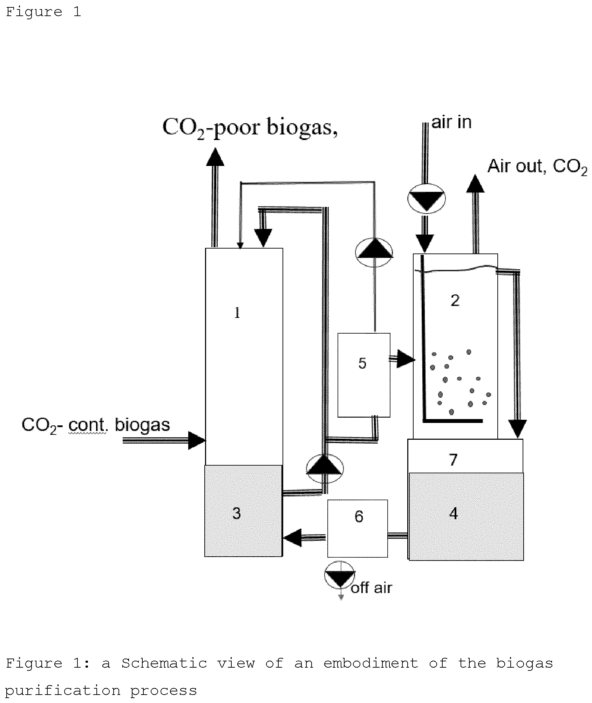

Figure 1 depicts a schematic view of a process according to the present disclosure.

### Detailed Description

The present disclosure pertains to a process for the removal of carbon dioxide from biogas comprising the following steps:
a. carbon dioxide-containing biogas is washed in a gas scrubber (1) by contacting the carbon dioxide-containing gas with a liquid dialkali carbonate-containing buffer solution (3) in the gas scrubber (1), forming:
   i) a carbon dioxide-poor biogas stream, and
   ii) a liquid stream comprising carbonate-rich buffer solution,
b. the carbonate-rich buffer solution is regenerated by feeding it to an aeration tank (2) in which it is contacted with air to form regenerated dialkali carbonate-containing buffer solution and carbon dioxide.

Compared to processes described in the prior art this process may be conducted with relatively inexpensive equipment, is energy efficient and is already cost- effective at lower capacities. It may be conducted at atmospheric pressure and low temperatures avoiding the necessity of high pressure adapted equipment and energy consuming heating. The process may be conducted at temperatures ranging from 0- 70 °C. All vessels and tanks needed for conducting this process may be any size container being gas- and liquid-tight as long as the relative sizes are adapted to the capacity needed and all in- and outlets and connects are suitable as long as they are gas- and liquid-tight. It was found that the process works smoothly at biogas production yields varying from 1 m³ to 100 m³ per hour. Generally a production yield of about 4-10 m³ per hour is used. Especially the size of the aeration vessel is determining for the maximum capacity possible.

The biogas retrieved from fermentations of biowaste such as for instance food waste such as spent coffee, cantine waste, vegetable/fruit waste, bakery water, brewery waste, feed waste such as swill, or household waste or combinations thereof may be fed directly into the process according to the disclosure without any pre-purification. Generally the carbon dioxide-containing biogas fed into the present process contains between 35 to 45 wt% carbon dioxide.

Owing to the possibility to conduct the process according to the disclosure at any capacity and with relatively inexpensive equipment at low temperatures and atmospheric or slightly above atmospheric pressure, the process can readily be used on site of the biowaste fermentation.

The carbon dioxide-poor biogas stream obtained with the process according to the disclosure generally contains between 82 to 100 vol% methane, preferably between 90 and 95 vol% methane. The purity of the biogas obtained may be adjusted to the envisaged use of the biogas. For use in combustion engines usually a purity of at least 90 vol% of methane is desired.

The dialkali carbonate-containing buffer solution (3) present in the gas scrubber (1) suitably has a concentration of between 2-15 wt%, preferably between 2-6 wt%. When using concentrations within these ranges it is ensured no precipitation occurs.

It is preferred to use disodium carbonate solution since it is readily available and inexpensive, but also other dialkali carbonate solutions may be used such as dipotassium carbonate.

At least part of the regenerated dialkali carbonate-containing buffer solution (4) is recycled to step a. The amount of regenerated dialkalicarbonate-containing buffer solution that is recycled may be adjusted to the operator's choosing, to create a stable process without any precipitation and or clogging of the connects while still having a high throughput. Preferably, the concentrations are set so as to be able to recycle all of the regenerated dialkali carbonate-containing buffer solution.

In the aeration tank air is contacted with the carbonate-rich buffer solution. As a result thereof the carbonate-rich stream is regenerated into dialkali carbonate and CO₂ gas is formed. The CO₂ gas is removed together with the air through the gas outlet of the aeration tank. In a preferred embodiment the air is fed into the aeration tank below the level of the carbonate-rich buffer solution. In this way intimate contact between the carbonate-rich buffer solution and the air is ensured.

In one embodiment oxygen being present in the regenerated dialkali carbonate buffer solution is removed in an oxygen removal vessel (6) prior to recycling to step a. Said oxygen is introduced into the regenerated dialkali carbonate buffer solution during the regeneration step. When using the resulting biogas as CNG (compressed natural gas) in for instance, combustion engines, the presence of oxygen is not desired. In those cases the oxygen may be removed prior to introducing the regenerated a dialkalicarbonate buffer solution to the gas scrubber again and avoiding oxygen to get into the biogas.

Said oxygen is preferably removed via a reversed osmosis membrane. Such a reversed osmosis membrane may easily be provided in the oxygen removal vessel (6). Upon placing a vacuum over said membrane the oxygen is pulled through the membrane while keeping the regenerated dialkali carbonate buffer solution in the vessel. Other methods may be used to remove the oxygen from the regenerated dialkalicarbonate buffer solution such as vacuum degassing or by means degassing membranes, but these membranes are extremely costly. When using a (relatively inexpensive) reversed osmosis membrane the presence of the high salt concentration is advantageously used to keep the liquid in while removing the gas. When using a vacuum degassing, the oxygen removal vessel basically is a reactor placed under reduced pressure of between 5-40 kPa, preferably 5-15 kPa. The oxygen present will simply escape from the solution and the regenerated dialkali carbonate buffer solution is stripped of oxygen. Generally the carbonate-rich buffer solution has a concentration of between 2-15 wt% of carbonate, more preferably 2-10 wt%, most preferably between 4-8 wt%.

With removing the liquid carbonate-rich buffer solution from the gas scrubber (1) some methane may be present within the stream. Optionally, prior to the regeneration, said methane may be removed in a methane removal vessel (5) and recycled to step a.

Preferably, said removal is conducted by means of vacuum degassing. When using a vacuum degassing, the methane removal vessel basically is a reactor placed under reduced pressure of between 5-40 kPa, preferably 5-15 kPa. The methane present will simply escape from the solution and the carbonate-rich buffer solution is stripped of methane. Optionally the methane removal is conducted via a reversed osmosis membrane that has been provided in the methane removal vessel (5). Such a reversed osmosis membrane may easily be provided in the methane removal vessel (5). Upon placing a vacuum over said membrane the methane is pulled through the membrane while keeping the carbonate- rich buffer solution in the vessel. Although other methods may be used to remove the methane from the regenerated dialkalicarbonate buffer solution such as degassing membranes, but these membranes are extremely costly. When using a (relatively inexpensive) reversed osmosis membrane the presence of the high salt concentration is advantageously used used to keep the liquid in while removing the gas.

The present disclosure further pertains to an apparatus for the purification of biogas comprising:
- a gas scrubber(1) provided with a gas inlet for CO₂- containing biogas and an gas outlet for CO2-poor biogas, a liquid inlet and a recycle loop for liquid dialkali carbonate buffer solution;
- an aeration tank (2) with a liquid inlet, a liquid outlet, an air inlet and an air outlet, the liquid inlet being connected to the recycle loop for liquid dialkali carbonate buffer solution, the air inlet being constructed so as to introduce air at the lower part of the aeration tank, the air outlet being provided at the upper part of the aeration tank, and the liquid outlet being connected to the liquid inlet of the gas scrubber(1). Optionally, the apparatus is further provided with a methane removal vessel(5) that is connectively placed between the liquid inlet of the aeration tank (2) and the recycle loop and /or an oxygen removal vessel(6) that connectively placed between the liquid outlet of the aeration tank and the liquid inlet of the gas scrubber(1).

Optionally the apparatus is provided with a pH and/or carbon dioxide sensor and optionally a controller for controlling on the basis of the sensor data. Said sensor data is indicative of pH values and or carbon dioxide concentrations. In this way an automated process can be provided.

Figure 1 provides a schematic view of a process according to the present disclosure.

### Description of the drawing

Figure 1 depicts a schematic view of an embodiment of the biogas purification process, comprising a gas scrubber (1) with a liquiddialkali carbonate buffer solution (3) being present at the lower part of the gas scrubber(1), an aeration tank(2), liquid dialkali carbonate -containing buffer solution (3), regenerated liquid alkali- containing buffer solution (4) being present in collection vessel(7), a methane removal vessel (5) and an oxygen removal vessel (6).

Biogas containing CO₂ is fed into a gas scrubber (1). A liquid dialkali carbonate-containing buffer solution is fed into the upper part of the gas scrubber. The carbon dioxide in the gas scrubber is converted into carbonate and remains in solution creating a liquid stream comprising carbonate-rich buffer solution while a CO₂-poor biogas stream is recovered. (Part of) the liquid carbonate-rich buffer solution is led to a methane removal vessel (5) wherein the removed methane is recycled back into the gas scrubber(1), the purified liquid carbonate-rich buffer solution is fed to a aeration tank (2). Air is bubbled through the aeration tank so as to regenerate the carbonate-rich buffer solution into regenerated dialkali carbonate buffer solution, while CO₂ gas formed is removed via the air outlet.

The regenerated dialkali carbonate-containing buffer solution is fed through an oxygen removal vessel (6) prior to recycling it to the gas scrubber (1).

## Claims

1. Process for the removal of carbon dioxide from biogas comprising the following steps:
a. carbon dioxide-containing biogas is washed in a gas scrubber (1) by contacting the carbon dioxide-containing gas with a liquid dialkali carbonate-containing buffer solution (3) in the gas scrubber (1), forming:
i) a carbon dioxide-poor biogas stream, and
ii) a liquid stream comprising carbonate-rich buffer solution,
b. the carbonate-rich buffer solution is regenerated by feeding it to an aeration tank (2) in which it is contacted with air to form regenerated dialkali carbonate-containing buffer solution and carbon dioxide.

2. Process according to claim 1, wherein at least part of the regenerated dialkali carbonate-containing buffer solution (4) is recycled to step a.

3. Process according to claim 2 wherein oxygen present in the regenerated dialkali carbonate buffer solution is removed in an oxygen removal vessel (6) prior to recycling to step a.

4. Process according to claim 3 wherein oxygen removal vessel is a vacuum degasser.

5. Process according to any of the preceding claims wherein prior to the regeneration methane present in the carbonate-rich stream is removed in a methane removal vessel (5) and recycled to step a.

6. Process according to claim 5 wherein the methane is removed via a reversed osmosis membrane that has been provided in the methane removal vessel (5) or by means of a vacuum degasser.

7. Process according to any one of the preceding claims wherein the carbon dioxide-containing biogas contains between 35 to 45 volt carbon dioxide.

8. Process according to any one of the preceding claims wherein the carbon dioxide-poor biogas stream contains between 82 to 100 vol% methane, preferably between 90 and 95 vol% methane.

9. Process according to any of the preceding claims wherein the dialkali carbonate-containing buffer solution (3) present in the gas scrubber (1) has a concentration of between 2-15 wt%, preferably between 2-6 wt%.

10. Process according to any one of the preceding claims wherein the carbon-dioxide-containing biogas originates from fermentation of spent coffee, food waste, feed waste, or household waste or combinations thereof.

11. Apparatus for the purification of biogas comprising:
- a gas scrubber(1) provided with a gas inlet for CO₂-containing biogas and an gas outlet for CO₂-poor biogas, a liquid inlet and a recycle loop;
- an aeration tank (2) with a liquid inlet, a liquid outlet, an air inlet and an air outlet, the liquid inlet being connected to the recycle loop for liquid dialkali carbonate buffer solution, the air inlet being constructed so as to introduce air at the lower part of the aeration tank, the air outlet being provided at the upper part of the aeration tank, and the liquid outlet being connected to the liquid inlet of the gas scrubber(1).

12. Apparatus according to claim 11, wherein a methane removal vessel(5) is connectively placed between the liquid inlet of the aeration tank (2) and the recycle loop.

13. Apparatus according to claim 11 or 12, wherein an oxygen removal vessel(6) is connectively placed between the liquid outlet of the aeration tank and the liquid inlet of the gas scrubber(1) .

14. Apparatus according to any one of preceding claims 11-13, wherein the apparatus is provided with a pH and/or carbon dioxide sensor.
